# EUROPÄISCHE PATENTANMELDUNG

(11) **EP 0 678 336 A2**
(43) Veröffentlichungstag der Anmeldung: **25.10.1995**
(21) Anmeldenummer: 95104619.2
(22) Anmeldetag: 29.03.1995
(51) Int. Cl.: B05B 15/12

(54) **Pulverbeschichtungskabine**

(30) Priorität: 18.04.1994 DE 4413347
(71) Anmelder: BÖLLHOFF VERFAHRENSTECHNIK GMBH & CO. KG, D-33647 Bielefeld (DE)
(72) Erfinder: Birkhofer, Karl-Heinz, D-88697 Bermatingen (DE); Söhnchen, Wolfgang, D-71554 Weissach i.T. (DE)
(74) Vertreter: Knoblauch, Andreas, Dr.-Ing.

(57) **Zusammenfassung**

Es wird eine Pulverbeschichtungskabine mit Seitenwänden (2, 3) angegeben, zwischen denen ein Boden (4) angeordnet ist, und mit einer Austragsöffnung (16) im Bereich des Bodens.

Eine derartige Kabine soll eine Rückführung des Pulvers beim Pulverbeschichten ermöglichen und dennoch begehbar sein.

Hierzu ist der Boden (4) im wesentlichen eben und eine über den Boden (4) bewegbare Abfördereinrichtung (17) ist vorgesehen, die auf dem Boden (4) liegendes Pulver in Richtung auf die Austragsöffnung (16) fördert.

## Beschreibung

Die Erfindung betrifft eine Pulverbeschichtungskabine mit Seitenwänden, zwischen denen ein Boden angeordnet ist, und mit einer Austragsöffnung im Bereich des Bodens.

Beim Pulverbeschichten von Werkstücken wird das Werkstück durch eine Pulverbeschichtungskabine hindurchgefahren. Das Werkstück wird mit dem Pulver beaufschlagt, wobei in der Regel das elektrostatisch aufgeladene Pulver mit Hilfe von Luft auf das Werkstück gesprüht wird. Diese Auftragsweise bedingt aber, daß mehr Pulver in die Kabine in Richtung auf das Werkstück eingetragen wird, als vom Werkstück letztendlich aufgenommen werden kann. Der Pulverüberschuß fällt dann nach unten auf den Boden. Hier häuft sich das Pulver an. Die Anhäufung ist aus zwei Gründen unerwünscht. Zum einen entmischt sich das Pulver allmählich, d.h. es erfolgt eine Trennung der Pulverkörner oder -partikel nach Größen. Bei einer Wiederverwertung des Pulvers, d.h. wenn das Pulver erneut in einen Beschichtungskreislauf eingeführt wird, kann dies zu einer Verminderung der Qualität der Pulverbeschichtung führen. Zum anderen steht das sich auf dem Boden der Beschichtungskabine ablagernde Pulver zeitweilig nicht für die Beschichtung zur Verfügung. Man muß daher eine weitaus größere Menge von Pulver verwenden, als dies notwendig wäre, wenn man das Pulver einem Kreislauf zuführen könnte.

Aus diesem Grunde hat man in einer bekannten Kabine (EP 0 200 681 B1) den Boden in Form einer Rinne ausgebildet, an deren tiefster Stelle sich die Austragsöffnung befindet. Das überschüssige Pulver kann nun an den geneigten Seitenwänden der Rinne, gegebenenfalls unterstützt durch eine kleine Vibration dieser Seitenwände, nach unten in die Austragsöffnung rutschen. Von dort kann es abgenommen und dem Kreislauf wieder zugeführt werden. Die Anordnung ist jedoch nachteilig, weil die Kabine aufgrund der rinnenförmigen Ausbildung des Bodens nicht mehr begehbar ist. Eine Begehbarkeit ist aber in vielen Fällen erforderlich, etwa wenn die Pulverbeschichtungsdüsen, mit denen das Pulver auf das Werkstück geblasen oder transportiert wird, eingestellt oder gewartert werden müssen. Weiterhin ist eine Begehbarkeit in vielen Fällen für die Reinigung der Pulverbeschichtungskabine erforderlich. Man kann diesem Problem zwar dadurch abhelfen, daß man einen Gitterrost oder ähnliches in die Kabine legt, bevor man sie betritt. Dies erfordert jedoch weitere Arbeitsschritte und vor allen Dingen eine zusätzliche Reinigung des Gitterrostes.

Ferner hat man versucht, das Pulver dadurch aus der Kabine zu entfernen, daß die Austragsöffnung mit einem Unterdruck beaufschlagt wird. Die Saugwirkung ist jedoch auf einen relativ engen Bereich um die Austragsöffnung herum begrenzt. In den übrigen Bereichen ergibt sich nach wie vor eine Anhäufung des Pulvers mit den erwähnten nachteiligen Effekten.

Der Erfindung liegt daher die Aufgabe zugrunde, bei einer begehbaren Kabine die Rückführung des Pulvers zu ermöglichen.

Diese Aufgabe wird bei einer Pulverbeschichtungskabine der eingangs genannten Art dadurch gelöst, daß der Boden im wesentlichen eben ist und eine über den Boden bewegbare Abfördereinrichtung vorgesehen ist, die auf dem Boden liegendes Pulver in Richtung auf die Austragsöffnung fördert.

Mit dieser Lösung wird das Pulver auch aus Bereichen abgefördert, die nicht in der unmittelbaren Umgebung der Austragsöffnung liegen. Daher kann man bei dieser Ausgestaltung den Boden im wesentlichen eben belassen, wodurch die Begehbarkeit sichergestellt ist. Das Pulver wird sich dort zwar ablagern. Durch die bewegbare Abfördereinrichtung kann es auf dem Boden jedoch nur kurze Zeit verweilen, und zwar so lange, bis die Abfördereinrichtung, die periodisch in der Kabine hin- und herbewegt werden kann, in den jeweiligen Bereich des Bodens gelangt. In diesem Augenblick wird das Pulver vom Boden weg in Richtung auf die Austragsöffnung bewegt. Hierbei ist es nicht erforderlich, daß die Abfördereinrichtung eine vollständige Reinigung des Bodens vornimmt. Ein gewisser Teil des Pulvers, der an dem Boden anhaftet, wird dort verbleiben. Der größte Teil des Pulvers, der normalerweise zur Anhäufung führen würde, wird jedoch vom Boden entfernt.

Vorzugsweise ist die Abfördereinrichtung vom Bereich eines Endes zum Bereich des anderen Endes durch die Kabine bewegbar und weist eine Breite auf, die im wesentlichen der Breite des Bodens entspricht. Hierdurch überstreicht die Abfördereinrichtung im wesentlichen die gesamte Bodenfläche, so daß sichergestellt ist, daß das Pulver aus allen Bereichen des Bodens entfernt wird. Die Begriffe "Länge" und "Breite" sind hier lediglich zu Orientierungszwecken verwendet worden. Es ist nicht zwingend, daß die Länge die Richtung ist, in der die Kabine ihre größte Erstreckung hat, obwohl dies in den meisten Kabinen der Fall sein wird. Es ist auch nicht erforderlich, daß die Abfördereinrichtung jeweils bis zur endseitigen Seitenwand verfahren wird. In den meisten Fällen reicht es aus, wenn die Abfördereinrichtung bis zu einem Punkt gefahren wird, der einen gewissen Abstand von der endseitigen Seitenwand aufweist.

Vorzugsweise weist die Abfördereinrichtung zumindest während ihrer Bewegung einen vorbestimmten Abstand zum Boden auf. Dieser Abstand gewährleistet, daß die Abfördereinrichtung nicht flächig am Boden entlang kratzt. Dies könnte zum einen zu einer mechanischen Beschädigung der Partikel oder Körner des Pulvers führen. Zum anderen würde dies einen gewissen Verschleiß bedingen, und zwar sowohl an der Abfördereinrichtung als auch am Boden. Schließlich vermeidet man dadurch eine Beschädigung der Oberfläche des Bodens, was eine nachfolgende Reinigung der Kabine ganz wesentlich erleichtert. Natürlich wird sich in Einzelfällen nicht vermeiden lassen, daß die Abfördereinrichtung stellenweise einen gewissen Kontakt mit dem Boden hat. Dieser Kontakt ist jedoch lokal begrenzt. Im übrigen wird der Abstand eingehalten.

Mit Vorteil ist die Abfördereinrichtung über eine Rutschkupplung mit einem Antrieb verbunden. Die Rutschkupplung erlaubt einerseits einen zuverlässigen Antrieb der Abfördereinrichtung. Zum anderen gestattet sie es jedoch der Abfördereinrichtung, stehen zu bleiben, wenn sie an ein Hindernis stößt. Dieses Hindernis kann durch einen Endanschlag gebildet sein. In diesem Fall muß die Antriebssteuerung mit flexiblen Positionen arbeiten. Wesentlicher ist aber ein Sicherheitsaspekt. Falls der Antrieb versehentlich in Betrieb genommen wird, solange sich eine Wartungsperson in der Kabine befindet, wird über die Rutschkupplung sichergestellt, daß diese Person durch Bewegung der Abfördereinrichtung nicht gefährdet oder verletzt werden kann.

Mit Vorteil wirkt der Antrieb über einen Seilzug auf die Abfördereinrichtung. Mit einem Seilzug lassen sich relativ große Kabinenlängen überbrücken. Der Seilzug ist relativ unempfindlich gegen Verschmutzung. Er ist einfach zu handhaben und zu warten. Anstelle eines Seiles kann natürlich auch eine Kette oder ein Zahnriemen verwendet werden.

Bevorzugterweise arbeitet die Abfördereinrichtung mit Luft als Fördermittel. Luft wird in vielen Fällen zum Eintrag des Pulvers in die Beschichtungskabine, d.h. zum Transport des Pulvers auf das zu beschichtende Werkstück, verwendet. Wenn man nun Luft auch zum Austrag des Pulvers aus der Kabine verwendet, kann man das Pulver ohne Trennung der Transport- oder Fördermedien praktisch unmittelbar im Kreislauf zurückführen. Luft ist ein sehr schonendes Transportmedium. Die Gefahr, daß das Pulver während des Transports oder sogar durch den Transport beschädigt wird, ist relativ gering. Darüber hinaus hat die Anordnung den Vorteil, daß Luft das Pulver in vielen Fällen auch bei unregelmäßigen Strukturen im Boden erreichen kann, bei denen eine mechanische Abstreif- oder Räumvorrichtung das Pulver nicht erreichen könnte.

Mit besonderem Vorteil ist die Austragsöffnung schlitzartig ausgebildet und erstreckt sich im wesentlichen in Längsrichtung der Kabine, und die Abfördereinrichtung ist in eine Richtung im wesentlichen parallel zur Austragsöffnung bewegbar. Hierdurch werden die Wege, die das Pulver bis zur Austragsöffnung zurücklegen muß, kurz gehalten. Das Pulver muß nur noch eine Strecke zurücklegen, die maximal der Breite der Kabine entspricht. Wenn die Austragsöffnung in der Mitte des Kabinenfußbodens angeordnet ist, beträgt die Strecke sogar nur die halbe Kabinenbreite.

Vorzugsweise ist die Abfördereinrichtung bei ihrer Bewegung in der Austragsöffnung geführt. Hierdurch erspart man sich eine weitere Führung für die Abfördereinrichtung. Trotzdem ist sichergestellt, daß die Abfördereinrichtung sich immer im wesentlichen parallel zu der Austragsöffnung bewegt.

Vorteilhafterweise ist die Austragsöffnung mit einem Unterdruck beaufschlagt. Das Pulver, das durch die Abfördereinrichtung in Richtung auf die Austragsöffnung gefördert worden ist, erreicht schließlich die Austragsöffnung und wird dort unmittelbar durch den Unterdruck abgesaugt. Die Abfördereinrichtung bewirkt den Transport des Pulvers vom Boden in die Austragsöffnung.

Vorzugsweise mündet die Austragsöffnung über ihre Länge in einen Austragskanal, der mit einer Saugeinrichtung verbunden ist, wobei sich der Querschnitt des Austragskanals mit zunehmendem Abstand von der Saugeinrichtung vermindert. Der Austragskanal gestattet den Aufbau von Unterdruckverhältnissen, die so gestaltet sind, daß über die gesamte Längserstreckung der Austragsöffnung ein ausreichender Unterdruck anliegt. Bei einer entsprechenden Ausgestaltung kann man durch die Verminderung des Querschnitts erreichen, daß sogar die Größe des Unterdrucks im wesentlichen über die Längserstrekkung konstant gehalten werden kann.

In einer besonders bevorzugten Ausgestaltung ist vorgesehen, daß die Abfördereinrichtung mindestens eine Saugöffnung aufweist, die über einen Kanal mit der Austragsöffnung verbunden ist. Die Abfördereinrichtung saugt also das Pulver vom Boden ab und fördert es über den Kanal in die Austragsöffnung. Das Saugen ergibt einerseits einen relativ schonenden Transport des Pulvers. Zum anderen vermeidet man ein Aufwirbeln des Pulvers. Schließlich läßt sich das Saugen mit relativ geringer Energie durchführen.

Hierbei ist besonders bevorzugt, daß der Kanal mit seiner Mündung in der Austragsöffnung oder dem Austragskanal endet, wobei die Querschnittsfläche der Mündung größer als, insbesondere zwei- bis fünfmal so groß wie, die Querschnittsfläche der Saugöffnung oder Saugöffnungen ist. Hierdurch lassen sich Saugdruckverhältnisse einstellen, die einerseits zu einer zuverlässigen Absaugung des Pulvers vom Boden der Kabine führen, andererseits aber nicht zu viel Energie erfordern. Wenn die Querschnittsfläche der Mündung zwei- bis fünfmal, insbesondere zwei- bis dreimal so groß ist wie die der Saugöffnung, ergibt sich an der Mündung nur eine relativ geringe Drosselung, so daß die Gefahr, daß die Mündung durch Pulver verstopft wird, auch relativ klein ist. Die Abfördereinrichtung versperrt zwar einen Teil der Austragsöffnung. Dies ist jedoch unkritisch, weil die dort entstehende Saugwirkung zwar für die unmittelbare Umgebung zunächst blockiert ist. Sie wird aber über die Saugöffnung bzw. die Saugöffnungen auf die gesamte Kabinenbodenoberfläche erstreckt, so daß das Pulver von dort in die Austragsöffnung gefördert werden kann.

Auch ist bevorzugt, daß sich die Mündung in einem länglichen Ansaugstutzen befindet, zu dem ein Saugöffnungsträger quer angeordnet ist. Der längliche Ansaugstutzen kann dann mit der entsprechend großen Querschnittsfläche der Mündung in der Austragsöffnung eingesetzt sein. Der Saugöffnungsträger erstreckt sich dann nach beiden Seiten, oder, wenn die Austragsöffnung im Bereich einer Seitenwand angeordnet ist, nur nach einer Seite, so daß bei einer Bewegung der Abfördereinrichtung die gesamte Fläche des Bodens von der Saugöffnung oder den Saugöffnungen überstrichen werden kann. Die Saugöffnung ist hierbei bevorzugterweise als Schlitz ausgebildet, der beispielsweise eine Breite von etwa 1 bis 2 mm hat.

Auch ist bevorzugt, daß die Abfördereinrichtung zusätzlich noch mindestens eine weitere Zusatzsaugöffnung aufweist, die verschließbar ist. Im Normalbetrieb wird die Zusatzsaugöffnung verschlossen sein, so daß während der Pulverbeschichtung die Abförderung des Pulvers nur durch die Saugöffnungen bzw. die Saugöffnung erfolgt. Wenn jedoch die Kabine gereinigt werden muß, ist vielfach ein Sauganschluß wünschenswert, der mit der Wartungsperson durch die Kabine bewegt werden kann. Wenn nun ein derartiger Sauganschluß in Gestalt der Zusatzsaugöffnung an der Abfördereinrichtung angeordnet ist, kann er mit der Wartungsperson durch die Kabine bewegt werden.

In einer anderen bevorzugten Ausgestaltung ist vorgesehen, daß die Abfördereinrichtung gegen den Boden und in Richtung auf die Austragsöffnung gerichtete Blasdüsen aufweist und mit einer Druckluftquelle in Verbindung steht. In diesem Fall erfolgt das Fördern des Pulvers in Richtung auf die Austragsöffnung nicht durch Saugen, sondern durch Blasen. Man kann hierdurch teilweise eine bessere Reinigung der Bodenoberfläche erzielen. Die Blasdüsen können hierbei nämlich Luftstrahlen erzeugen, die das Pulver von dem Boden sozusagen abschälen. Allerdings ist der Energieaufwand hier etwas größer.

Auch ist bevorzugt, daß die Abfördereinrichtung im Bereich der Seitenwände der Form des Übergangs von Seitenwand zu Boden angepaßt ist. In den meisten Fällen wird man diesen Übergang so gestalten, daß keine Winkel entstehen, in denen sich das Pulver absetzen kann. In vielen Fällen wird es ausreichen, den Übergang abzurunden. In diesem Fall kann es noch von Vorteil sein, auch den unteren Bereich der Seitenwand oder den oberen Bereich der Rundung vom Pulver zu befreien, d.h. auch das Pulver aus diesem Bereich abzufördern. Hierzu reicht es im Grunde genommen aus, die Abfördereinrichtung an die Form des Übergangs anzupassen.

Vorteilhafterweise ist der Boden als Lauffläche für eine Reinigungsvorrichtung ausgebildet. Da der Boden im wesentlichen eben ist, kann eine automatisch, halbautomatisch oder manuell arbeitende Reinigungsvorrichtung auf ihm mit der nötigen Sicherheit verfahren werden. Das Trägersystem für die Werkstücke wird dadurch freigehalten.

Die Erfindung wird im folgenden anhand von bevorzugten Ausführungsbeispielen in Verbindung mit der Zeichnung beschrieben. Hierin zeigen:
- Fig. 1: eine schematische Querschnittsansicht einer Pulverbeschichtungskabine,
- Fig. 2: eine schematische Draufsicht der Pulverbeschichtungskabine,
- Fig. 3: eine Detailansicht einer ersten Ausführungsform im Querschnitt und
- Fig. 4: eine Detailansicht einer zweiten Ausführungsform im Querschnitt.

Eine Pulverbeschichtungskabine 1 weist Seitenwände 2, 3 auf, zwischen denen sich ein im wesentlichen ebener Boden 4 erstreckt. Dem Boden gegenüberliegend ist eine Decke 5 angeordnet, die einen Schlitz 6 aufweist. Oberhalb des Schlitzes 6 ist in nicht dargestellter Weise vielfach eine Laufschiene angeordnet, an der Werkstücke hängend durch die Pulverbeschichtungskabine 1 hindurch transportiert werden können. An den Stirnseiten sind Tore 7, 8 vorgesehen, mit denen die Pulverbeschichtungskabine 1 auf Arbeitsbreite verschlossen werden kann. Schematisch dargestellt sind Pulverbeschichtungsköpfe 9, 10, durch die Pulver, das zum Beschichten der Werkstücke verwendet werden soll, in die Kabine 1, genauer gesagt in ihren Arbeitsraum 11, eingesprüht wird. Der Arbeitsraum 11 ist im Betrieb von den Seitenwänden 2, 3, dem Kabinenboden 4 und der Decke 5 umschlossen, so daß das in den Arbeitsraum 11 eingetragene Pulver durch Unterdruck in einem definierten Raum bleibt und nicht nach außen tritt. Eine Verschmutzung der Umgebung und eine Gefährdung des Bedienungspersonals wird dadurch weitgehend ausgeschlossen.

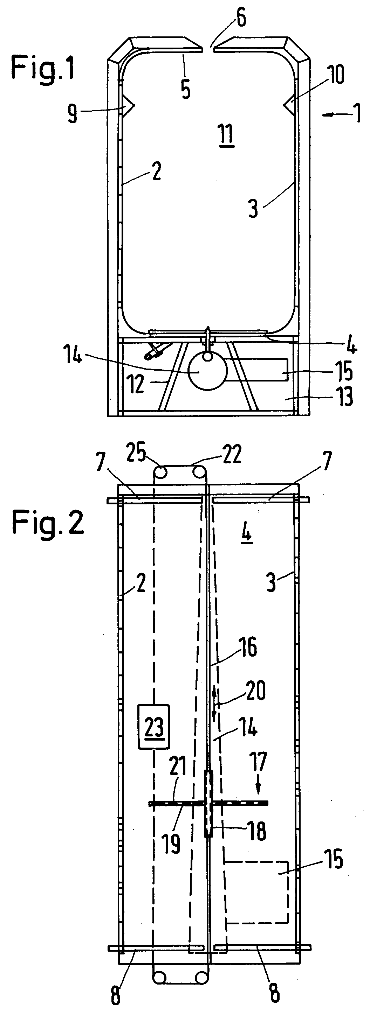

Der Boden 4 ist auf einem Gestell 12 abgestützt. Unterhalb des Bodens 4 steht daher noch ein Versorgungsraum 13 zur Verfügung, in dem ein Austragskanal 14 angeordnet ist. Der Austragskanal steht mit einem Sauggebläse 15 in Verbindung, das Luft aus dem Austragskanal 14 absaugt. Wie insbesondere aus Fig. 2 ersichtlich ist, vermindert der Austragskanal 14 seinen Querschnitt mit zunehmender Entfernung vom Sauggebläse 15.

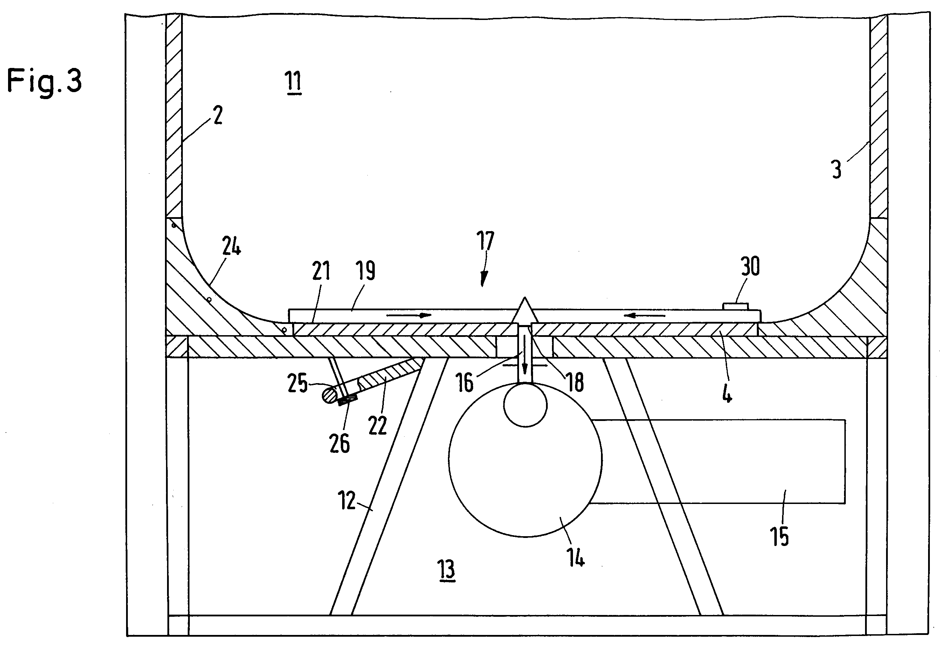

Wie insbesondere aus Fig. 3 ersichtlich ist, steht der Austragskanal 14 über eine Austragsöffnung 16 mit dem Arbeitsraum 11 in Verbindung, und zwar, wie aus Fig. 2 ersichtlich ist, praktisch über die gesamte Länge der Kabine 1.

Ferner ist im Arbeitsraum 11 eine Abfördereinrichtung 17 vorgesehen, die einen Ansaugstutzen 18 und einen Saugöffnungsträger 19 aufweist. Der Saugöffnungsträger 19 ist quer zum Ansaugstutzen 18 angeordnet. Der Ansaugstutzen weist, wie dies in Fig. 2 dargestellt ist, eine längliche Form auf. Er ist in der Austragsöffnung 16 angeordnet, d.h. in die Austragsöffnung 16 eingesteckt. Er ist dort in Richtung des Doppelpfeils 20 hin- und herbewegbar. Durch die Führung in der Austragsöffnung 16 wird die Abfördereinrichtung 17 also immer im wesentlichen parallel zur Austragsöffnung 16 bewegt.

Wie dies in Fig. 3 auf der linken Seite der Abfördereinrichtung 17 dargestellt ist, weist der Saugöffnungsträger 19 auf seiner Unterseite, d.h. der dem Boden 4 zugewandten Seite, Saugöffnungen 21 auf. Anstelle einer Vielzahl von nebeneinander angeordneten Saugöffnungen 21 kann auch eine einzige, durchgehende Saugöffnung vorgesehen sein. Die Saugöffnungen 21 haben eine geringe Breite (in Richtung des Doppelpfeils 20 gesehen). Die Saugöffnung 21 könnte auch an der Vorder- oder Rückseite des Saugöffnungsträgers 19 angeordnet sein.

Obwohl der Saugöffnungsträger 19 wesentlich länger ist als Ansaugstutzen 18, hat die Mündung des Kanals, der die Saugöffnungen 21 mit dem Ansaugstutzen 18 verbindet, im Ansaugstutzen 18 eine größere Querschnittsfläche als die Summe der Querschnittsflächen aller Saugöffnungen 21. Dies führt dazu, daß im Ansaugstutzen 18 nur ein relativ geringer Druckverlust eintritt, der Unterdruck aus dem Austragskanal 14 also praktisch ungedrosselt zum Absaugen des Pulvers von dem Boden 4 verwendet werden kann.

Die Abfördereinrichtung 17 ist mit einem über Umlenkrollen 25 umgelenkten Seil 22 verbunden, das seinerseits wieder von einem Antrieb 23 angetrieben werden kann. Der Antrieb 23 weist in nicht dargestellter Weise eine Rutschkupplung auf, die einen Vortrieb der Abfördereinrichtung 17 verhindert, wenn die Abfördereinrichtung 17 gegen einen Widerstand stößt, also beispielsweise gegen die Tore 7, 8 oder, falls dies bei einer falschen Betriebsweise einmal vorkommen sollte, gegen eine Bedienungsperson, die sich im Arbeitsraum 11 aufhält.

Wie insbesondere aus Fig. 3 ersichtlich ist, ist der Übergang zwischen den Seitenwänden 2, 3 und dem Boden 4 abgerundet, d.h. der Arbeitsraum 11 weist hier einen Innenradius 24 auf.

Die Kabine wird wie folgt betrieben. Nach Einfahren eines nicht näher gezeigten Werkstücks wird Pulver über die Beschichtungsköpfe 9, 10 in den Arbeitsraum 11 eingeblasen. Ein Teil des Pulvers wird am Werkstück anhaften. Der überschießende Teil des Pulvers fällt auf den Boden 4. Gleichzeitig mit der Inbetriebnahme der Beschichtungsköpfe 9, 10 wird mit Hilfe des Antriebs 23 die Abfördereinrichtung 17 in Bewegung gesetzt und das Sauggebläse 15 eingeschaltet. Die Abfördereinrichtung 17 wird nun im Arbeitsraum 11 über den Boden 4 hin- und hergefahren. Hierbei hält die Abfördereinrichtung 17 einen kleinen Abstand zum Boden 4 ein, so daß das auf dem Boden befindliche Pulver von unten in den Saugöffnungsträger 19 eintreten kann. Es gelangt von dort über den Ansaugstutzen 18 und die Austragsöffnung 16 in den Austragskanal 14 und wird dort vom Sauggebläse 15 abgenommen. Das Pulver kann dann in einem nicht näher dargestellten Kreislauf den Beschickungsköpfen 9, 10 wieder zugeführt werden, gegebenenfalls nach einer Aufbereitung. Durch die Abfördereinrichtung 17 wird also verhindert, daß sich das Pulver lokal anhäuft und entmischt. Man kommt bei einer derartigen Betriebsweise mit einer relativ kleinen Menge an Pulver aus. Dennoch ist der Boden 4 im wesentlichen eben und damit begehbar.

Ferner ist am Saugöffnungsträger 19 eine verschließbare Zusatzsaugöffnung 30 vorgesehen. Diese ist im normalen Beschichtungsbetrieb geschlossen. Wenn die Kabine gereinigt wird, kann sie allerdings geöffnet werden und steht dann als verfahrbare Saugsteckdose zum Abtransport der Reinigungsrückstände, also des entfernten Pulvers, zur Verfügung.

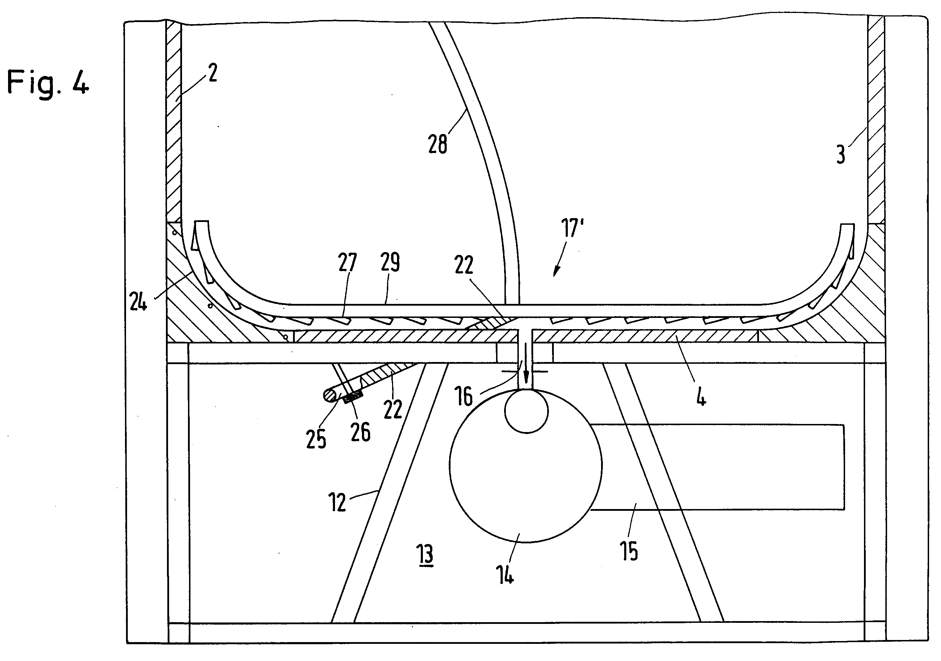

Fig. 4 zeigt eine abgewandelte Ausgestaltung, die im wesentlichen derjenigen aus Fig. 3 entspricht. Gleiche Bauteile sind daher auch mit gleichen Bezugszeichen versehen.

Geändert hat sich gegenüber der Ausgestaltung nach Fig. 2 die Abfördereinrichtung, die hier als Abfördereinrichtung 17' dargestellt ist. Die Abfördereinrichtung 17' arbeitet nicht mehr saugend, wie dies bei der Ausgestaltung nach Fig. 3 der Fall ist, sondern blasend. Zu diesem Zweck sind eine Reihe von Blasdüsen 27 vorgesehen, die auf den Boden 4 und die Austragsöffnung 16 hin ausgerichtet sind. Die Blasdüsen 27 sind über einen Schlauch 28 und einen Träger 29 mit einer nicht näher dargestellten Druckluftquelle verbunden. Der Träger 29 ist hierbei über den eigentlichen Boden 4 hinaus verbreitert und paßt sich dem Innenradius 24 an. Die Blasdüsen 27 sind so ausgerichtet, daß sie einen Luftstrahl unter einem Winkel so auf den Boden 4 bzw. den Innenradius 24 richten, daß dort befindliches Pulver nicht nur in Richtung auf die Austragsöffnung 16 geblasen, also gefördert wird, sondern unter Umständen auch durch die Luftstrahlen sozusagen von dem Boden 4 abgeschält wird. Letzteres ist aber nicht unbedingt notwendig. Ansonsten arbeitet die Abfördereinrichtung 17' ähnlich wie die Abfördereinrichtung 17. Sie wird beim Betrieb durch den Arbeitsraum 11 hin- und herbewegt, wobei sie beispielsweise von dem Seil 22, das über Umlenkrollen 25 geführt ist, die ihrerseits wieder über Bolzen 26 am Rahmen 12 aufgehängt sind, angetrieben wird. Das auf dem Boden 4 befindliche Pulver wird in Richtung auf die Austragsöffnung 16 geblasen und dort über den Austragskanal 14 abgesaugt.

Der Boden 4 kann aufgrund seiner ebenen Ausbildung auch als Lauffläche für eine nicht näher dargestellte Reinigungsvorrichtung verwendet werden.

## Patentansprüche

1. Pulverbeschichtungskabine mit Seitenwänden, zwischen denen ein Boden angeordnet ist, und mit einer Austragsöffnung im Bereich des Bodens, dadurch gekennzeichnet, daß der Boden (4) im wesentlichen eben ist und eine über den Boden (4) bewegbare Abfördereinrichtung (17, 17') vorgesehen ist, die auf dem Boden (4) liegendes Pulver in Richtung auf die Austragsöffnung (16) fördert.

2. Kabine nach Anspruch 1, dadurch gekennzeichnet, daß die Abfördereinrichtung (17, 17') vom Bereich eines Endes zum Bereich des anderen Endes durch die Kabine (1) bewegbar ist und eine Breite aufweist, die im wesentlichen der Breite des Bodens (4) entspricht.

3. Kabine nach Anspruch 1, dadurch gekennzeichnet, daß die Abfördereinrichtung (17, 17') zumindest während ihrer Bewegung einen vorbestimmten Abstand zum Boden (4) aufweist.

4. Kabine nach einem der Ansprüche 1 bis 3, dadurch gekennzeichnet, daß die Abfördereinrichtung (17, 17') über eine Rutschkupplung mit einem Antrieb (23) verbunden ist.

5. Kabine nach Anspruch 4, dadurch gekennzeichnet, daß der Antrieb (23) über einen Seilzug (22) auf die Abfördereinrichtung (17, 17') wirkt.

6. Kabine nach einem der Ansprüche 1 bis 5, dadurch gekennzeichnet, daß die Abfördereinrichtung (17, 17') mit Luft als Fördermittel arbeitet.

7. Kabine nach einem der Ansprüche 1 bis 6, dadurch gekennzeichnet, daß die Austragsöffnung (16) schlitzartig ausgebildet ist und sich im wesentlichen in Längsrichtung der Kabine (1) erstreckt und die Abfördereinrichtung (17, 17') in eine Richtung im wesentlichen parallel zur Austragsöffnung (16) bewegbar ist.

8. Kabine nach Anspruch 7, dadurch gekennzeichnet, daß die Abfördereinrichtung (17) bei ihrer Bewegung in der Austragsöffnung (16) geführt ist.

9. Kabine nach einem der Ansprüche 1 bis 8, dadurch gekennzeichnet, daß die Austragsöffnung (16) mit einem Unterdruck beaufschlagt ist.

10. Kabine nach Anspruch 9, dadurch gekennzeichnet, daß die Austragsöffnung (16) über ihre Länge in einen Austragskanal (14) mündet, der mit einer Saugeinrichtung (15) verbunden ist, wobei sich der Querschnitt des Austragskanals (14) mit zunehmendem Abstand von der Saugeinrichtung (15) vermindert.

11. Kabine nach einem der Ansprüche 1 bis 10, dadurch gekennzeichnet, daß die Abfördereinrichtung (17) mindestens eine Saugöffnung (21) aufweist, die über einen Kanal mit der Austragsöffnung (16) verbunden ist.

12. Kabine nach Anspruch 11, dadurch gekennzeichnet, daß der Kanal mit seiner Mündung in der Austragsöffnung (16) oder dem Austragskanal (14) endet, wobei die Querschnittsfläche der Mündung größer als, insbesondere zwei- bis fünfmal so groß wie, die Querschnittsfläche der Saugöffnung oder der Saugöffnungen (21) ist.

13. Kabine nach Anpruch 12, dadurch gekennzeichnet, daß sich die Mündung in einem länglichen Ansaugstutzen (18) befindet, zu dem ein Saugöffnungsträger (19) quer angeordnet ist.

14. Kabine nach einem der Ansprüche 11 bis 13, dadurch gekennzeichnet, daß die Abfördereinrichtung (17) zusätzlich noch mindestens eine weitere Zusatzsaugöffnung (30) aufweist, die verschließbar ist.

15. Kabine nach einem der Ansprüche 1 bis 10, dadurch gekennzeichnet, daß die Abfördereinrichtung (17') gegen den Boden (4) und in Richtung auf die Austragsöffnung (16) gerichtete Blasdüsen (27) aufweist und mit einer Druckluftquelle in Verbindung steht.

16. Kabine nach einem der Ansprüche 1 bis 15, dadurch gekennzeichnet, daß die Abfördereinrichtung (17') im Bereich der Seitenwände der Form des Übergangs (24) von Seitenwand (2, 3) zu Boden (4) angepaßt ist.

17. Kabine nach einem der Ansprüche 1 bis 16, dadurch gekennzeichnet, daß gekennzeichnet, daß der Boden (4) als Lauffläche für eine Reinigungsvorrichtung ausgebildet ist.
